# EUROPEAN PATENT APPLICATION

(11) **EP 1 779 722 A1**
(43) Date of publication of application: **02.05.2007**
(21) Application number: 05785959.7
(22) Date of filing: 20.09.2005
(51) Int. Cl.: A01K 5/00

(54) **FEED COLLECTING DEVICE AND OPERATING METHOD FOR BARN**

(30) Priority: 28.09.2004 JP 2004281713
(71) Applicant: Kohshin Engineering Co., Ltd., Oaza-Katsura, Shippo-cho Ama-gun Aichi 4970004 (JP)
(72) Inventor: Sumiya, Hiroki c/o Kohshin Engineering Co., Ltd., Ama-gun Aichi; 4970004 (JP)
(74) Representative: Müller-Boré & Partner Patentanwälte
(86) International application number: PCT/JP2005/017249
(87) International publication number: WO 2006/035627

(57) **Abstract**

A feed pushing apparatus 1 includes a traveling body 11 which travels along a feeding path 5, a feed pushing blade 15 which is mounted to a frame 13 of the traveling body 11 and is capable of rising from the feeding path 5, and a first hydraulic cylinder 17 which is mounted to the frame of the traveling body 11, and reciprocally drives the feed pushing blade 15 between a stall 3 side and a side opposite from the stall, with movement of the traveling body 11. By reciprocating the feed blade by the first hydraulic cylinder 17, the feed positioned away from the stall can be pushed back to the stall side.

## Description

The present invention relates to a feed straightening apparatus for straightening feed for livestock in a livestock barn to eat the feed more easily, and a method for operating the same.

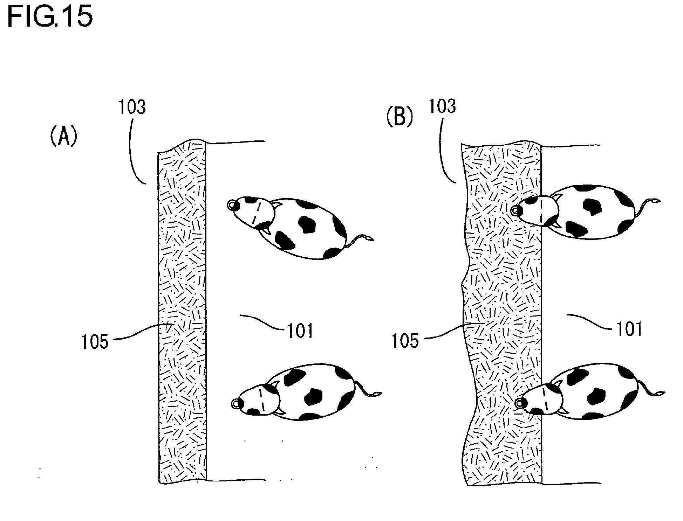

As shown in Figure 15(A), livestock such as cows is accommodated in a stall 101, and feed 105 is placed with a predetermined width in a feeding path 103 of the stall (for example, see Patent Document 1).

However, livestock pushes the feed with its nose or the like when eating the feed 105, and as shown in Figure 15 (B), the feed 105 is away from the stall 101. This results in the state in which the livestock cannot eat the feed 105.

Therefore, the feed 105 which is away from the stall 101 is pushed back to the stall 101 by men with scoops or the like, and since the feed 105 has to be pushed back about four times to ten times a day, enormous efforts are required.

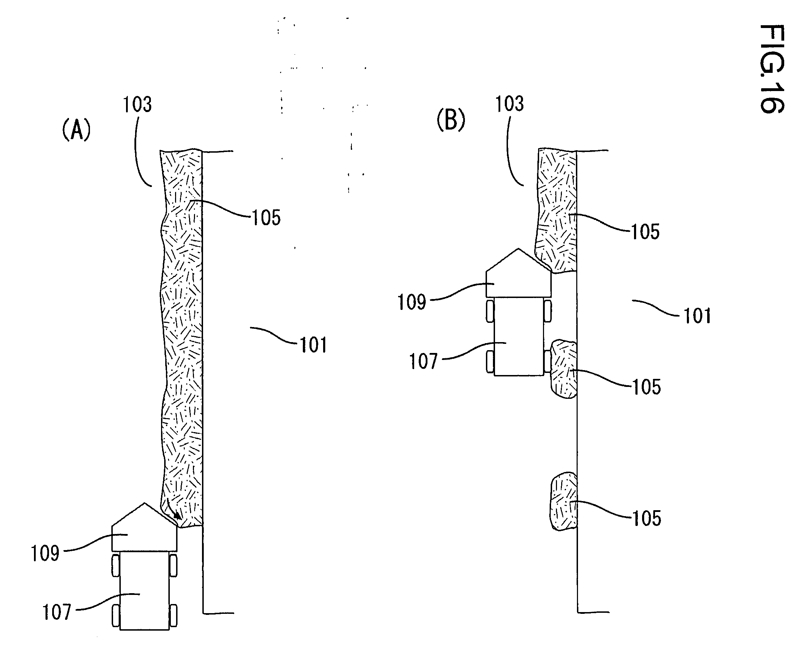

Meanwhile, as shown in Figure 16 (A), a trail is made by pushing back the feed 105 by mounting an angled blade 109 to a tip end of a fork lift 107 and advancing the fork lift 107 along the longitudinal direction of the stall 101.

This seems to align the feed 105 in such a manner as the feed 105 slides on the side surface of the blade 109 as shown by the arrow in Figure 16(A).
Patent Document 1: Japanese Utility Model Registration No. 3088813

However, the feed 105 is not a granular material, but includes pasture grasses, for example, of about 20 to 30 cm, and their surfaces are rough. Therefore, feed 105 tends to be an aggregate with the grasses that are entangled with one another. Especially when water is contained in the pasture grasses to adhere feeding stuff thereto, it tends to form a large aggregate.

Therefore, even if the fork lift 107 advances, the feed 105 does not slide well along the inclined surface of the blade 109, and as a result forms large piles by stall 101 as shown in Figure 16(B), and thus there arises the problem that the feed 105 is present in some places while the feed 105 is not present in other places and the feed cannot be reliably pushed back.

Further, the feed is given to livestock twice a day, that is, early in the morning and at night, which requires the operation of pushing the feed back at night, and therefore, automation of the feed pushing operation is strongly needed.

Further, a leftover feed by livestock has to be collected about once a day for keeping it from rotting, and this also needs to be performed by man power or a fork lift, thus requiring enormous efforts.

The present invention is made in view of the above described circumference, and a first object is to reliably push the feed, which is away from a stall, back to the stall side, and a second object is to automatically perform an operation of collecting leftover feed.

A feed pushing apparatus for a livestock barn of the present invention is provided with a traveling body which travels on a feeding path provided along a stall of a livestock barn. Also, a feed pushing blade, which is in a form rising from said feeding path, is provided with an apparatus frame which moves with the traveling body, and the feed pushing blade is reciprocally driven between the stall side and a side opposite from the stall by a blade drive mechanism. By reciprocally driving the feed pushing blade, the feed which is away from the stall can be reliably pushed back to the stall side.

The apparatus frame is preferably integrated with a frame of the traveling body to construct the feed pushing apparatus to be of a self-propelled type.

Further, a preferable construction is that at a side portion of the apparatus frame at the stall side, an auxiliary blade is provided to be turnable between a retreat position along the apparatus frame and an advance position where its tip end substantially contacts the stall side around a vertical shaft perpendicular to the feeding path. Further, the apparatus frame is provided with an auxiliary cylinder mechanism which drives the auxiliary blade to the advance position. With such a construction, by moving the traveling body with the auxiliary blade in the advance position, the leftover feed by livestock can be scraped and collected.

In the case of adopting the above described construction, the following operation method can be adopted. An initial action (a) of causing the feed pushing apparatus to travel from the one end portion up to a position where it returns by a predetermined distance to the other end portion side with the auxiliary blade kept in the retreat position, a pushing and gathering-up action (b) of advancing the auxiliary blade to the advance position and causing the pushing apparatus to travel to the one end portion side, and thereby, pushing feed corresponding to a distance of a predetermined distance Lₘₐₓ or less to the one end portion side to gather it up, and a return action (c) of retreating the auxiliary blade to the retreat position and causing the feed pushing apparatus to travel to the other end portion side up to a position where it returns by a distance of a predetermined distance Lₘₐₓ or less from an end portion of the left feed. These steps are sequentially performed, and thereafter, the above describedpushingandgathering-upaction (b) andreturnaction (c) are repeated. The predetermined distance Lₘₐₓ can be made a maximum distance, which allows the traveling body to advance the auxiliary blade of the feed pushing apparatus to the advance position to push the feed.

Leftover Feed by livestock is collected about once a day for preventing it from rotting, and the leftover amount differs everyday. Therefore, if the leftover is to be collected at one time on the day with a large amount of leftover, an excessive burden is sometimes exerted on the feed pushing apparatus.

According to the above described operation method, the feed pushing apparatus is caused to travel from the one end portion up to a position where it returns by a predetermined distance to the other end portion side with the auxiliary blade kept in the retreat position (initial action (a)). Thereafter, the auxiliary blade is advanced to the advance position and the pushing apparatus is caused to travel to the one end portion side, and thereby, the feed (corresponding to a distance of a predetermined distance Lₘₐₓ or less) is pushed to the one end portion side to be gathered up (pushing and gathering-up action (b)). Next, the auxiliary blade is retreated to the retreat position and the feed pushing apparatus is caused to travel to the other end portion side up to a position where it returns, by the distance of the predetermined distance Lₘₐₓ or less, from an end portion of the left feed (return action (c)). Thereafter, the above described pushing and gathering-up action (b) and return action (c) are repeated.

In this manner, the feed pushing apparatus is operated, and since the predetermined distance Lₘₐₓ is made a maximum distance which allows the traveling body to advance the auxiliary blade of the feed pushing apparatus to the advance position to push the feed, and the feed is collected a plurality of times on the occasion of collecting the feed, the burden on the feed pushing apparatus can be reduced.

Note that the stall can be defined as the place which accommodates livestock such as cows, hens and horses in the present invention.

Figure 1 is a plan view of a feed pushing apparatus of one embodiment of the present invention;
Figure 2 is a plan view of the feed pushing apparatus;
Figure 3 is a side view of the feed pushing apparatus;
Figure 4 is a side view of the feed pushing apparatus;
Figure 5 is a partially omitted rear view of the feed pushing apparatus;
Figure 6 is a plan view of the feed pushing apparatus;
Figure 7 is a partially enlarged perspective view of the feed pushing apparatus;
Figure 8 is an explanatory view explaining a method for operating the feed pushing apparatus;
Figure 9 is an explanatory view explaining the method for operating the feed pushing apparatus;
Figure 10 is an explanatory view explaining the method for operating the feed pushing apparatus;
Figure 11 is an explanatory view explaining the method for operating the feed pushing apparatus;
Figure 12 is a plan view of a feed pushing apparatus of a second embodiment;
Figure 13 is a plan view of a feed pushing apparatus of another embodiment;
Figure 14 is a partial front view of a feed pushing apparatus of another embodiment;
Figure 15 is a plan view explaining a conventional example; and
Figure 16 is a plan view explaining the conventional example.

### <First Embodiment>

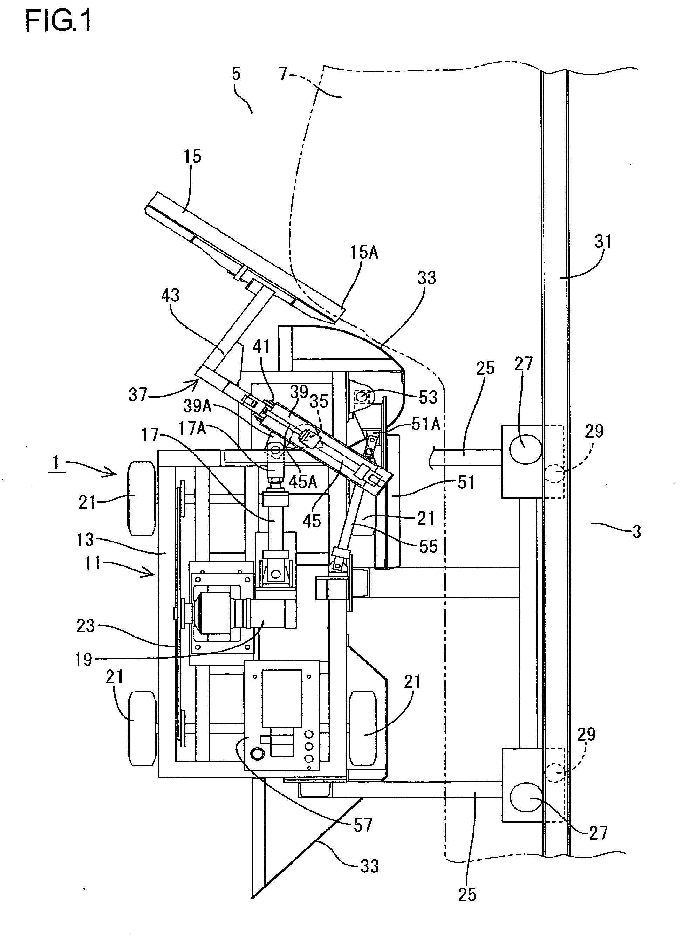

A first embodiment of the present invention will be described with reference to Figure 1 to Figure 11.

A feed pushing apparatus 1 of this embodiment is for pushing feed 7, which is fed to a feeding path 5, to a stall 3 side in a livestock barn provided with the feeding path 5 along the stall 3.

The feed pushing apparatus. 1 includes a traveling body 11 which travels along the feeding path 5, a feed pushing blade 15 which is mounted to a frame 13 of the traveling body 11 and in the form rising from the feeding path 5, and a first hydraulic cylinder 17 (corresponding to a blade drive mechanism) which is mounted to the frame 13 of the traveling body 11 and reciprocally drives the feed pushing blade 15 between the stall 3 side and an opposite side from it with movement of the traveling body 11.

The traveling body 11 includes the stout frame 13 (also defined herein as the traveling body frame and the apparatus frame) in a substantially quadrangular frame shape made of a steel material, and four traveling wheels 21 which are rotatably supported at four corners of the frame 13 and are driven by a motor 19. The power of the motor 19 is transmitted to the traveling wheels 21 by a chain 23. The traveling body 11 is made reciprocally movable along a side end portion of the stall 3 by performing a drive control of the motor 19 by a controller not shown.

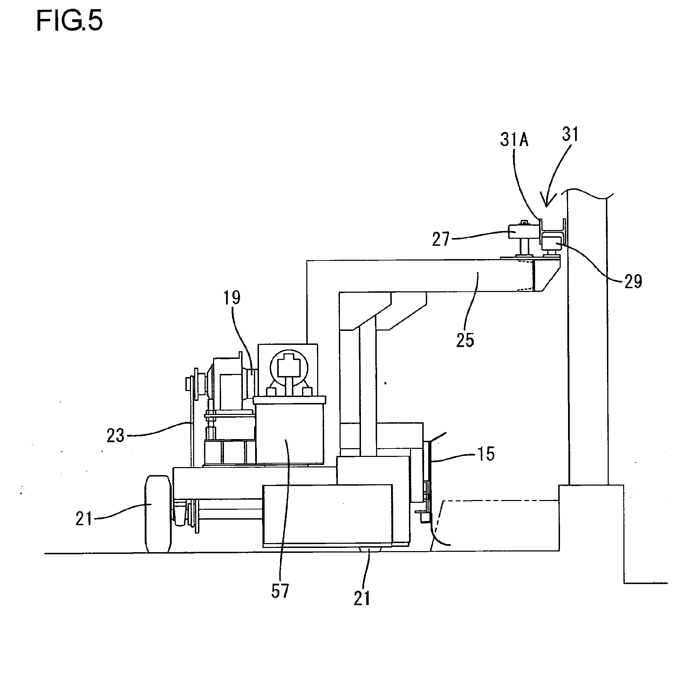

The frame 13 includes a pair of arm members 25 and 25 which extends upward from two positions that are positioned near the front end and the stall, and positioned near the rear end and the stall, and are bent substantially perpendicularly toward the stall side from a midpoint. An outer guide roller 27 and an inner guide roller 29 (corresponding to guide wheels which guide a traveling route of the apparatus frame 13), which are pivotally supported rotatably around vertical axes, are provided at a tip end of each of the arm members 25 and 25. Meanwhile, at the side end portion of the stall 3, a guide rail 31, made of an H type steel material, extends along the feeding passage 5 and is laid at a position at a predetermined height from a floor surface of the feeding path 5. As shown in Figure 5, the outer guide roller 27 rolls on an outer side of one side 31A of the parallel sides of the section of the guide rail 31. Further, the inner guide roller 29 rolls on an inner side so as to sandwich the one side 31A of the parallel sides of the section of the guide rail 31 between the outer guide roller 27 and the inner guide roller 29. In this manner, the guide rail 31, and the outer guide roller 27 and the inner guide roller 29 are engaged with one another, so that the traveling body 11 is capable of reliably moving reciprocally along the side end portion of the stall 3.

Guard portions 33 and 33, which are each raised from the path, are mounted at a corner portion at the front end of the frame 13 at the stall 3 side, and a corner portion at the rear end of the frame 13 at the stall 3 side, and prevent the feed 7 from entering the feed pushing apparatus 1 when the feed pushing apparatus 1 reciprocally moves.

A rotary arm 37 is mounted, with a vertical shaft 35 (connecting pin) which is perpendicular to the feeding path 5 as a center, in the vicinity of the corner portion at the front portion of the frame 13 near to the stall 3, and the feed pushing blade 15 is provided at a tip end of the rotary arm 37.

The rotary arm 37 is constituted of a base end side arm 39 at the vertical shaft 35 side, and a tip end side arm 43 provided at a tip end of the base end side arm 39 to be turnable in the vertical direction around a horizontal shaft 41 (connecting pin) in a direction perpendicular to the vertical shaft 35.

The base end side arm 39 is in a linear shape in plane view, and the tip end side arm 43 forms an L-shape in plane view which extends along an extending direction of the base end side arm 39 from the tip end portion of the base end side arm 39, and is bent to the stall 3 side substantially perpendicularly at an intermediate portion.

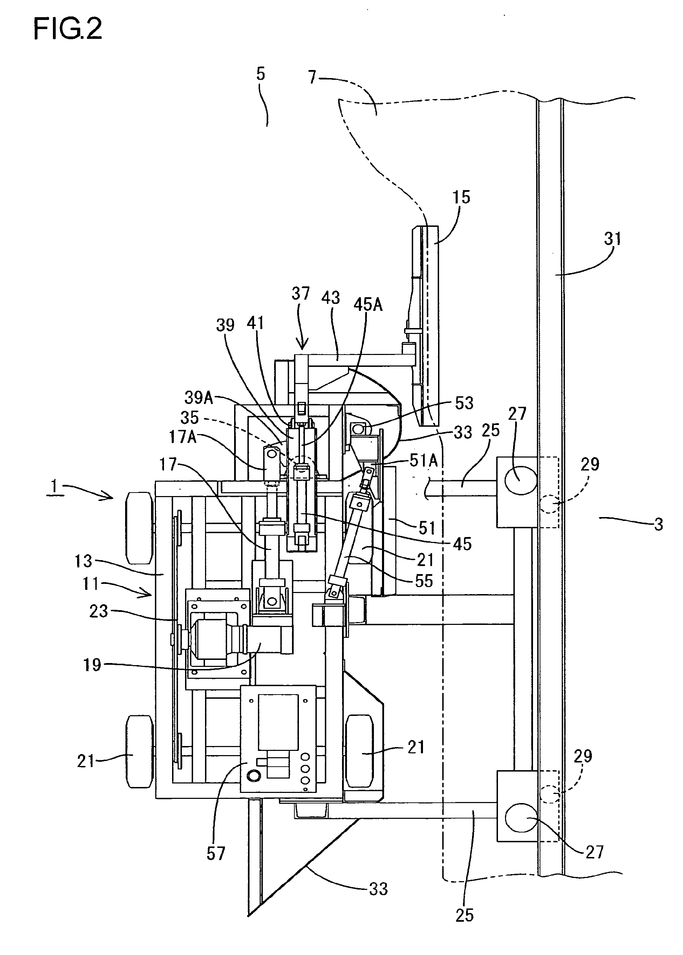

The base end side arm 39 is provided with a rod connecting portion 39A at a position nearer to the tip end side arm 43 than the vertical shaft 35, and a rod 17A of the first hydraulic cylinder 17 mounted to the frame 13 is rotatably connected to the rod connecting portion 39A. When the first hydraulic cylinder 17 presses the base end side arm 39, the rotary arm 37 rotates in the horizontal direction around the vertical shaft 35 Further, the feed pushing blade 15 is in the approaching posture, which comes close to a point at a predetermined distance (for example, 50 cm) from the side end portion of the stall 3 along the traveling direction of the traveling body 11 as shown in Figure 2 and from an inclined posture shown in Figure 1.

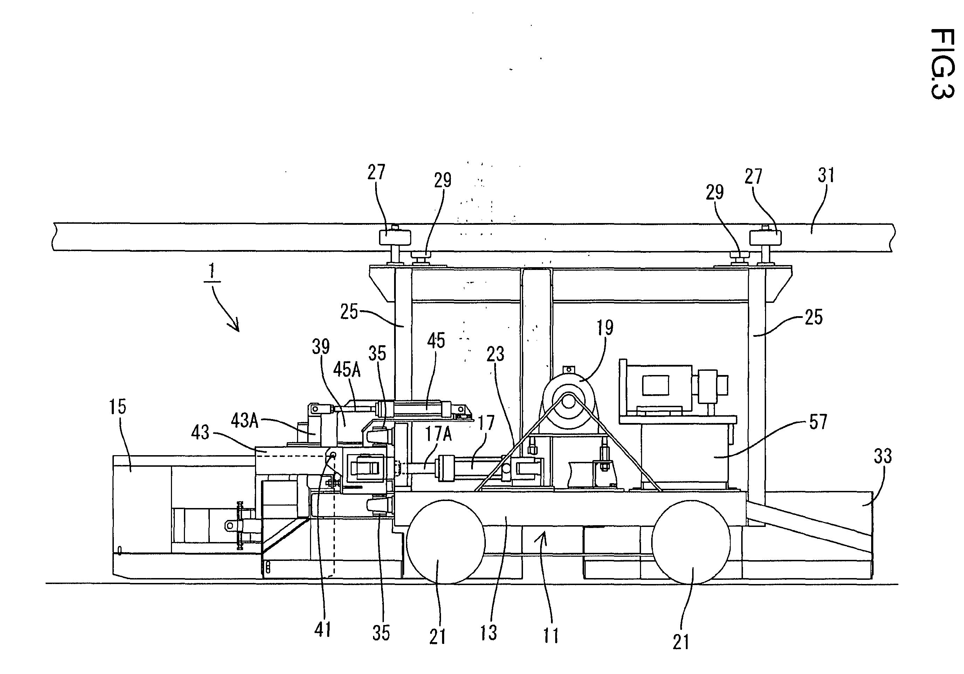

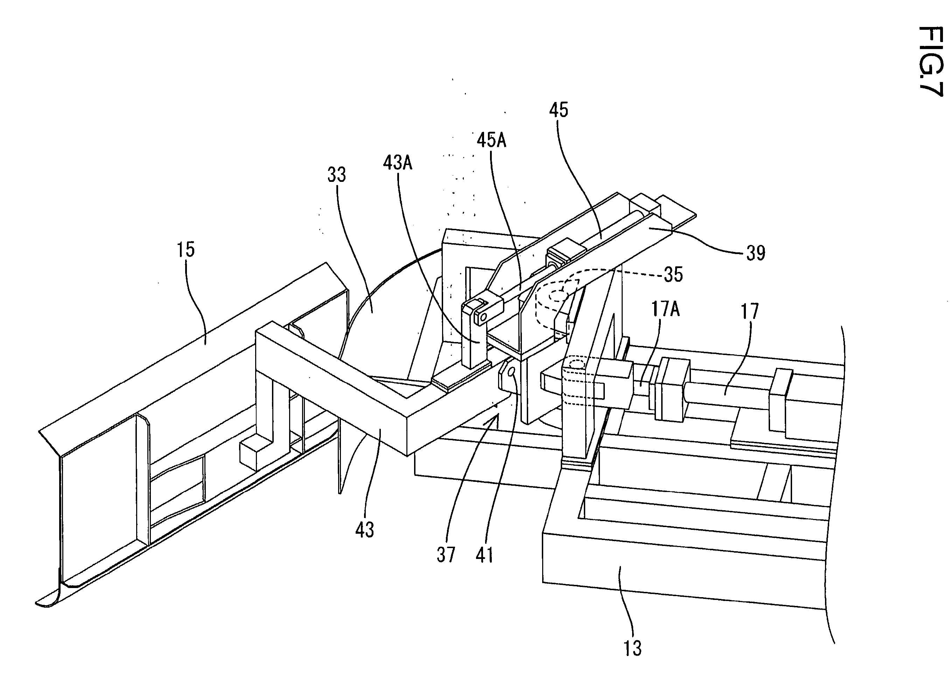

A rod connecting part 43A which protrudes upward is provided at a position near the base end of the tip end side arm 43 as shown in Figures 3 and 7, and a tip end of a rod 45A of a second hydraulic cylinder 45 (corresponding to vertical drive cylinder) is placed on the base end side arm 39 and is rotatably connected to the rod connecting part 43A.

The plate-shaped feed pushing blade 15 is fixed to the tip end of the tip end side arm 43 so as to be substantially perpendicular to one side of the tip end side arm 43 at its tip end side. The feed pushing blade 15 has its lower end portion located at a height position at which it is capable of being in sliding contact with the floor surface of the feeding path 5 in a horizontal posture as shown in Figure 3, and has one end 15A of the feed pushing blade 15 at the stall 3 side located substantially on an extension line of the horizontal shaft 41 (connecting pine) as shown in Figure 1.

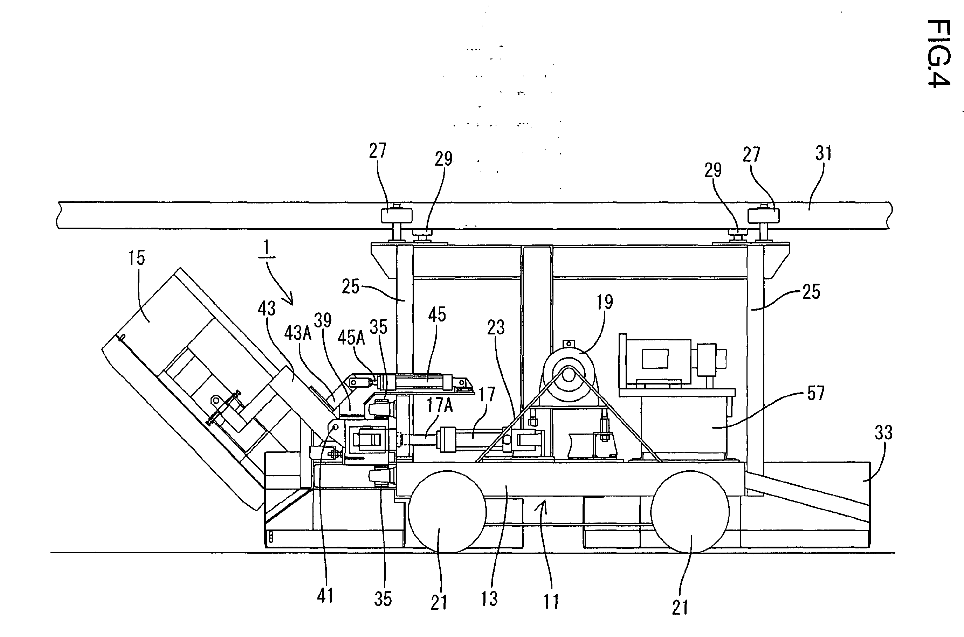

By contraction of the second hydraulic cylinder 45, the feed pushing blade 15 rotates in the vertical direction around the horizontal shaft 41 so as to be in an inclined posture in Figure 4 from a horizontal posture in Figure 3.

The feed pushing blade 15 has its lower end portion formed in the shape which is rounded and curved as shown in Figure 5.

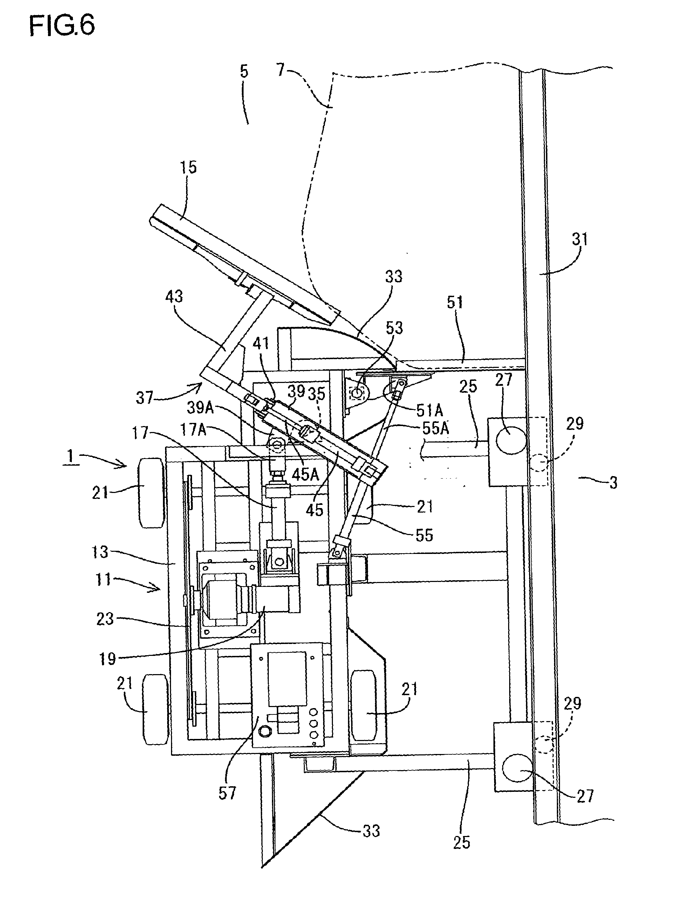

At a side portion of the frame 13 at the stall 3 side, a plate-shaped auxiliary blade 51 is provided to be turnable between a retreat position along the frame 13 (see Figure 1) and an advance position in which a tip end thereof is substantially in contact with the stall 3 (see Figure 6) around a vertical shaft 53 (connecting pin). The auxiliary blade 51 has its lower edge portion formed to be capable of sliding in contact with the bottom surface.

A rod connecting part 51A is provided in the vicinity of a center of the auxiliary blade 51, and a tip end of a rod 55A of a third hydraulic cylinder 55 (auxiliary cylinder mechanism) placed on the frame 13 is rotatably connected to the rod connecting part 51A. By extension and contraction of the third hydraulic cylinder 55, the auxiliary blade 51 is turned between the retreat position and the advance position.

Note that the length of the auxiliary blade 51 is such an extent that the tip end is in close vicinity to the side end portion of the stall 3 in the advance position.

A hydraulic device 57 is placed at a rear portion of the frame 13, and each of the hydraulic cylinders 17, 45 and 55 is extended and contracted by the hydraulic device 57.

### <Method for operating the feed pushing apparatus 1>

A method for operating the feed pushing apparatus 1 of this embodiment will now be described.

### (First action)

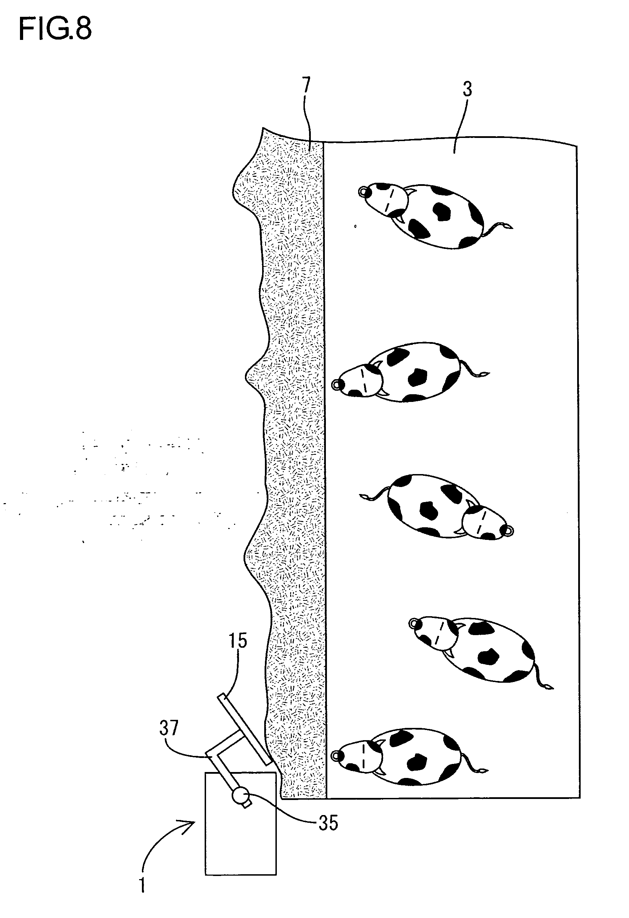

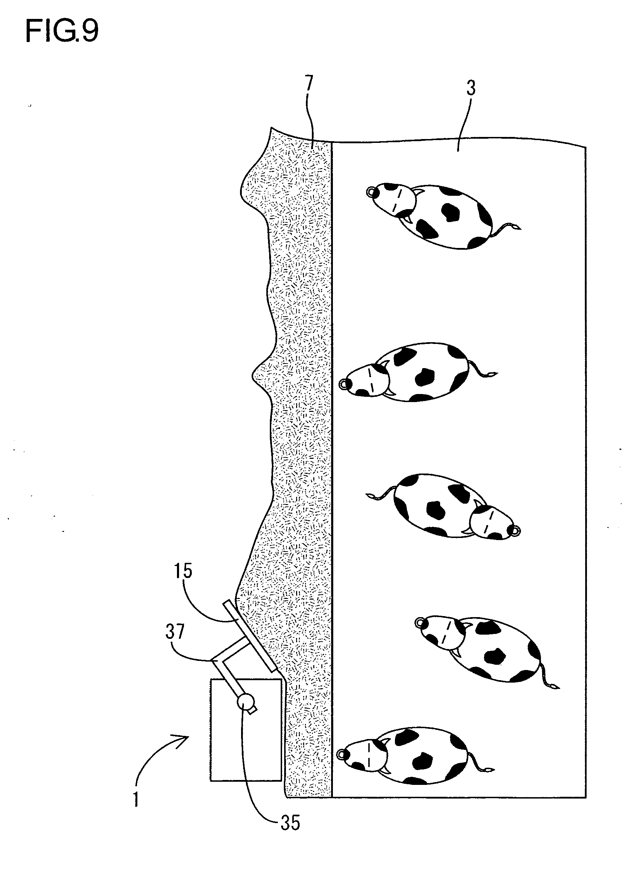

First, the feed pushing apparatus inclines the feed pushing blade 15 with respect to the stall 3, and brings it in a horizontal posture (initial posture) with respect to the feeding path 5 (see Figures 1 and 3), advances a predetermined distance from the state in Figure 8 to the state in Figure 9 (for example, about 80 cm), and thereafter, stops (the auxiliary blade 51 is in the retreat position). The feed 7 moves in the direction to go near to the stall 3 as it slides along the feed pushing blade 15.

### (Second action)

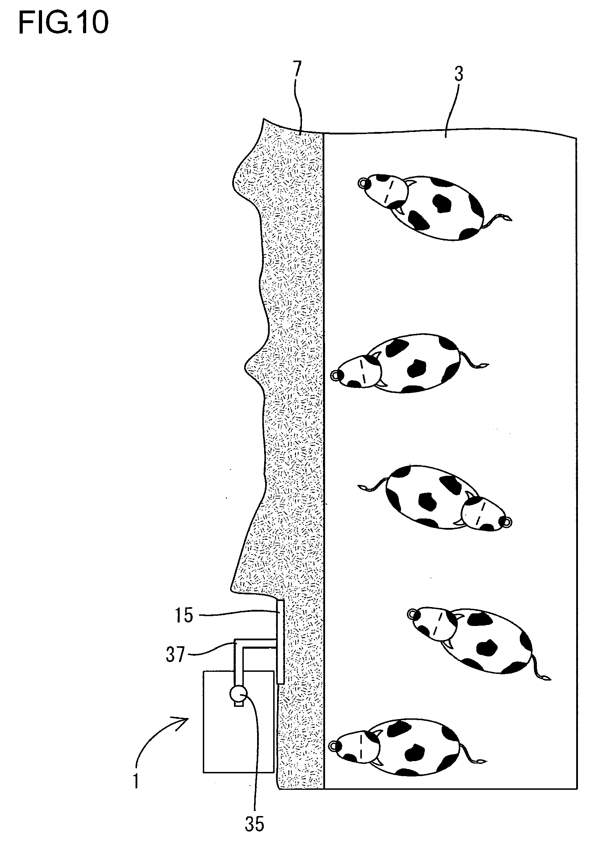

Next, the feed pushing apparatus 1 extends the first hydraulic cylinder 17 to turn the rotary arm 37 to swing the feed pushing blade 15 to bring the feed pushing blade 15 into the advancing posture as shown in Figure 10. In this manner, the feed 7 can be reliably pushed to the stall 3 side.

### (Third action)

Further, thereafter, the feed pushing apparatus 1 contracts the second hydraulic cylinder 45 to turn the feed pushing blade 15 to be in the inclined posture (see Figure 4) from the horizontal posture (see Figure 3) . Then, the feed 7 drops by its own weight. Thereby, the feed 7 can be prevented from adhering to the feed pushing blade 15. Thereafter, the feed pushing apparatus 1 returns the feed pushing blade 15 to the initial posture.

Hereinafter, the first to the third actions are repeated.

As described above, according to the feed pushing apparatus 1 of this embodiment, the feed 7 which is supplied to the feeding path 5 can be reliably pushed to the stall 3 side.

Since according to the feed pushing apparatus 1 of this embodiment, the guide rail 31 extending along the feeding path 5 is provided at the stall 3 side, and the guide rollers 27 and 29 which engage with the guide rail 31 are provided at the frame 13, the feeding apparatus 1 can be prevented from meandering, and as a result, the feed 7 can be pushed to the stall 3 with uniform width.

### <Method for Pushing and Gathering up Leftover Feed 7>

Next, an operation for pushing and gathering up the leftover feed 7 by livestock to one end of the feeding path 5 will be described.

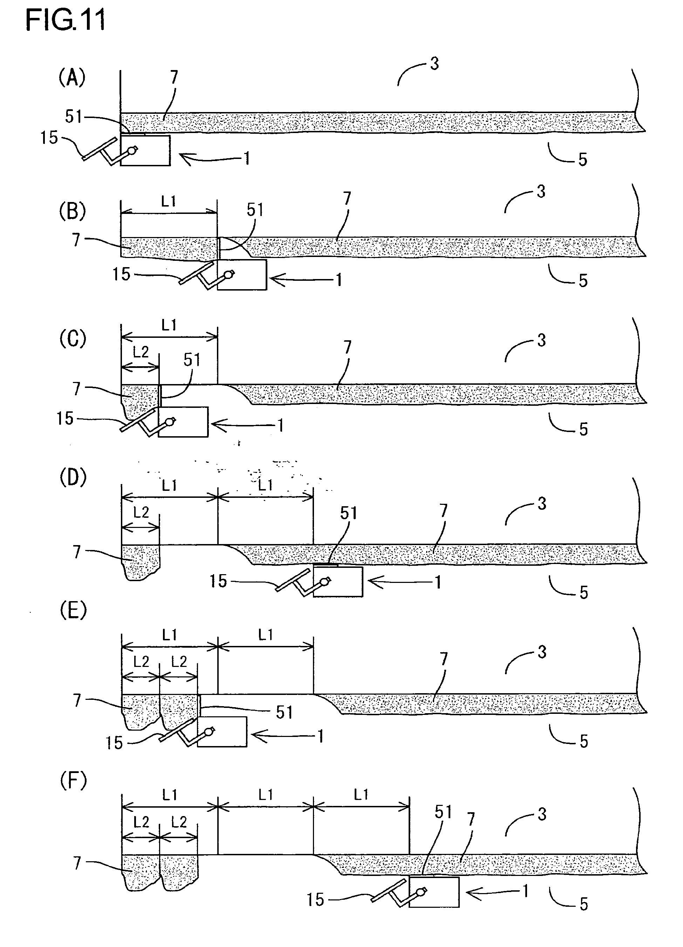

Figure 11(A) shows a state before pushing and gathering up the feed, and in this state, the feed pushing apparatus 1 is located at a front end (left end) of the stall 3.

### <First Pushing and Gathering-up Operation>

### (Initial action (a))

The feed pushing apparatus 1 travels to the position where it returns by a predetermined distance L1 from the front end (left end) to the rear end (right end) side with the auxiliary blade 51 kept in the retreat position (see Figures 11 (A) and (B)).

### (Pushing and gathering-up action (b))

After the initial action (a), the feed pushing apparatus 1 advances the auxiliary blade 51 to the advance position, and travels to the front end side, and pushes the feed 7 corresponding to the distance of a predetermined distance Lₘₐₓ or less (L1 - L2 in this case) to the front end side to gather it up (see Figures 11(B) and (C)).

### (Return action (c))

After the pushing and gathering-up action (b), the feed pushing apparatus 1 retreats the auxiliary blade 51 to the retreat position, and travels to the rear end side to the position at which it returns by the distance of the predetermined distance Lₘₐₓ or less (L1 in this case) from the end portion of the remaining feed 7 (see Figures 11(C) and (D)).

### <Second Pushing and Gathering-up Operation>

### (Pushing and gathering-up action (b))

After the first pushing and gathering-up operation, the feed pushing apparatus 1 advances the auxiliary blade 51 to the advance position, and travels to the front end side, and thereby, pushes the feed 7 corresponding to the distance of the predetermined distance Lₘₐₓ or less (L1 in this case) to the front end side to gather it up (see Figures 11 (D) and (E)).

### (Return action (c))

After the pushing and gathering-up action (b), the feed pushing apparatus 1 retreats the auxiliary blade 51 to the retreat position, and travels to the rear end side to the position at which it returns by the distance of the predetermined distance Lₘₐₓ or less (L1 in this case) from the end portion of the remaining feed 7 (see Figures 11(E) and (F)).

The same operation as the second pushing and gathering-up operation is repeated thereafter.

Note that the predetermined distance Lₘₐₓ is the maximum distance which allows the feed pushing apparatus 1 to travel with the auxiliary blade 51 advanced to the advance position and push the feed 7 to gather it up, and is the distance which is appropriately set in accordance with the ability of the feed pushing apparatus 1, and the leftover amount of the feed 7.

According to the operation method for pushing and gathering up the leftover feed 7 of this embodiment, on pushing and gathering up the feed 7, the feed is pushed and gathered up a plurality of times, and therefore, the burden on the feed pushing apparatus 1 can be reduced.

The traveling distance of the feed pushing apparatus 1 may be controlled in accordance with time, or the rotational frequency signal of the traveling wheel 21 may be obtained from the rotary encoder, and the traveling distance may be controlled in accordance with the signal.

### <Second Embodiment>

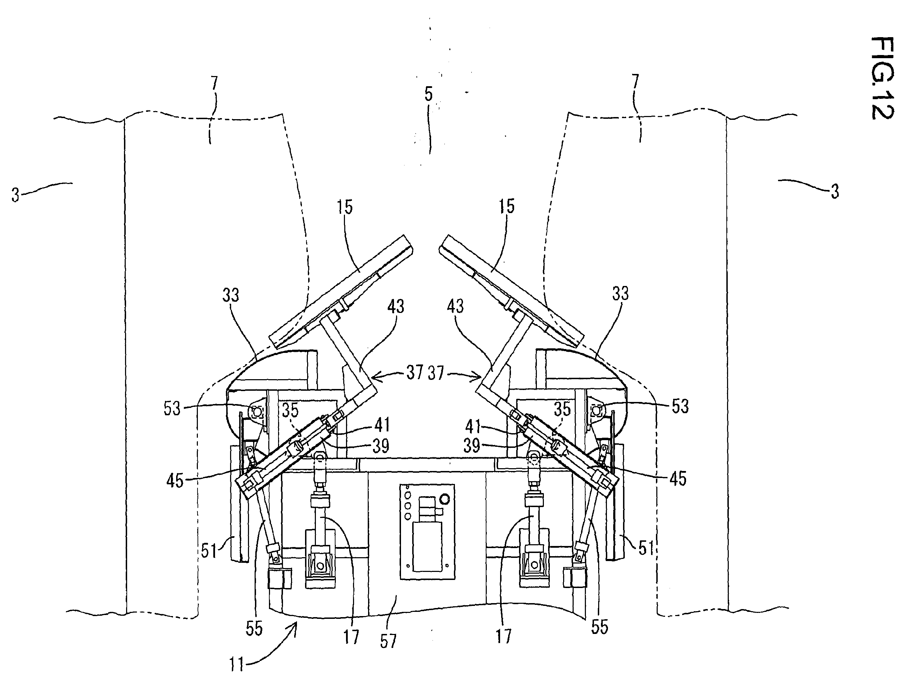

Next, a second embodiment will be described with reference to Figure 12. In the second embodiment, only the constructions differing from that in the first embodiment will be described, and the same other constructions, operation and effect as those of the first embodiment will be omitted. The same constructions are assigned with the same reference numerals and characters as in the first embodiment.

The feed pushing apparatus 1 of this embodiment is used when the stalls 3 are provided in two rows with the feeding path 5 therebetween.

The feed pushing apparatus 1 differs from the first embodiment in the respect that the same rotary arm 37 provided with the feed blade 15 and auxiliary blade 51 as in the first embodiment are included at both sides of the traveling body 11 of 1.

According to the feed 7 pushing apparatus 1 of this embodiment, feed pushing of the stalls 3 in two rows can be performed with one feed pushing apparatus 1. A control board or the like for one apparatus can be used for controlling the feed pushing blades 15 and the auxiliary blades 51, and therefore manufacturing cost can be kept low.

### <Other Embodiments>

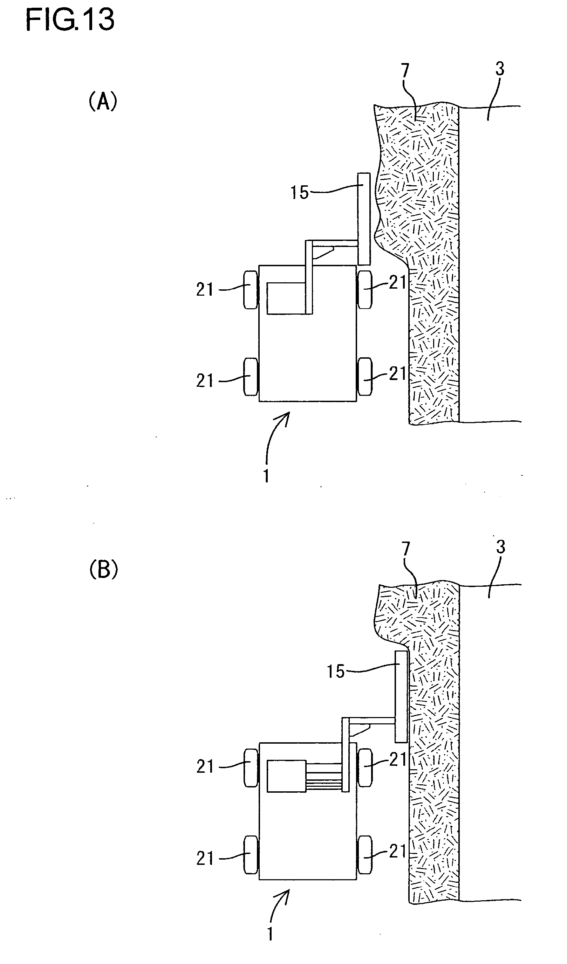

(1)In the above described embodiments,the hydraulic cylinders 17, 45 and 55 are used as the drive mechanism, but the drive mechanism is not limited to the hydraulic cylinders, rather pneumatic cylinders and the like may be used.
(2) In the above described embodiments, the feed pushing blade which makes oscillating motion is described, but as shown in Figure 13, the feed pushing blade 15 may be constructed to be capable of parallel translation between a separated position (Figure 13 (A)) separated at a predetermined distance from the side end portion of the stall 3, and an advance position (Figure 13 (B)) advanced to the side end portion of the stall 3 from the separated position by a drive mechanism. In this case, as the drive mechanism, a hydraulic cylinder, a pneumatic cylinder or the like may be used.
(3) In the above described embodiments, the apparatus frame is integrated with the frame 13 of the traveling body 11, and the self-propelled type feed pushing apparatus 1 is used, but the apparatus frame and the frame 13 of the traveling body 11 may be constructed to be separate pieces.
(4) In the above described embodiments, the rotary arm 37 is constituted of two members that are the base end side arm 39 and the tip end side arm 43, but may be constituted of one member.
(5) In the above described embodiments, the feed pushing apparatus 1 performs the first action, the second action and the third action in sequence, but it is possible that the feed pushing apparatus may not perform the third action.
(6) In the above described embodiments, the feed pushing apparatus 1 is provided with the guide rollers 27 and 29 which engage with the guide rail 31 and guides the traveling route of the traveling body 11, but guide rollers 27 and 29 may be omitted.

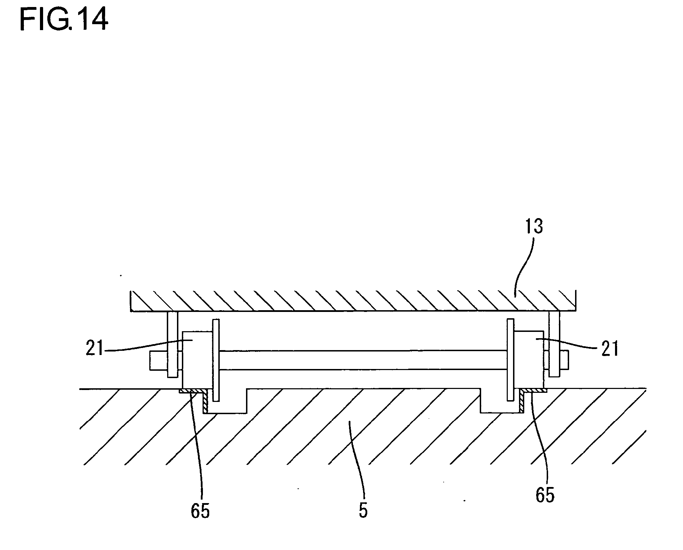

When the guide rollers 27 and 29 are omitted, ribbed wheels can be used as the traveling wheels 21 of the traveling body 11, and rails 65 which engage with the traveling wheels 21 may be provided in the feeding path 5 as shown in Figure 14. In this manner, the traveling body 11 can be also caused to travel along the side end portion of the stall 3.
(7) In the above described embodiment, the feed pushing apparatus 1 is provided with the auxiliary blade 51, but the auxiliary blade 51 is not essential, and is provided as the occasion requires.

## Claims

1. A feed pushing apparatus for a livestockbarn, comprising:
a traveling body which travels on a feeding path provided along a stall of a livestock barn;
a feed pushing blade which is provided at an apparatus frame which is movable with said traveling body, and is in the form rising from said feeding path; and
a blade drive mechanism which reciprocally drives said feed pushing blade between said stall side and a side opposite from the stall with movement of said traveling body.

2. The feed pushing apparatus for a livestock barn according to claim 1,
wherein said apparatus frame is integrated with a frame of said traveling body to construct the feed pushing apparatus to be of a self-propelled type.

3. The feed pushing apparatus for a livestock barn according to claim 1,
wherein said feed pushing blade is provided at a tip end of a rotary arm provided to be turnable around a vertical shaft perpendicular to said feeding path, and said blade drive mechanism is constituted of a cylinder mechanism which presses between said vertical shaft and said pushing blade of said rotary arm.

4. The feed pushing apparatus for a livestock barn according to claim 2,
wherein said feed pushing blade is provided at a tip end of a rotary arm provided to be turnable around a vertical shaft perpendicular to said feeding path, and said blade drive mechanism is constituted of a cylinder mechanism which presses between said vertical shaft and said feed pushing blade of said rotary arm.

5. The feed pushing apparatus for a livestock barn according to claim 3,
wherein said rotary arm is constituted of a base end side arm at said vertical shaft side, and a tip end side arm provided at a tip end of the base end side arm to be rotatable in a vertical direction around .a horizontal shaft in a direction perpendicular to said vertical shaft, and said base end side arm is provided with a vertical drive cylinder mechanism for turning said tip end side arm in the vertical direction around said horizontal shaft.

6. The feed pushing apparatus for a livestock barn according to claim 4,
wherein said turning arm is constituted of a base end side arm at said vertical shaft side, and a tip end side arm provided at a tip end of the base end side arm to be rotatable in a vertical direction around a horizontal shaft in a direction perpendicular to said vertical shaft, and said base end side arm is provided with a vertical drive cylinder mechanism for turning said tip end side arm in the vertical direction around said horizontal shaft.

7. The feed pushing apparatus for a livestock barn according to claim 1, **characterized in that**
on said stall side, a guide rail extending along said feeding path is provided, and said apparatus frame is provided with a guide wheel which engages with said guide rail to guide a traveling route of the apparatus frame.

8. The feed pushing apparatus for a livestock barn according to claim 2, **characterized in that**
on said stall side, a guide rail extending along said feeding path is provided, and said apparatus frame is provided with a guide wheel which engages with said guide rail to guide a traveling route of the apparatus frame.

9. The feed pushing apparatus for a livestock barn according to claim 3, **characterized in that**
on said stall side, a guide rail extending along said feeding path is provided, and said apparatus frame is provided with a guide wheel which engages with said guide rail to guide a traveling route of the apparatus frame.

10. The feed pushing apparatus for a livestock barn according to claim 4, **characterized in that**
on said stall side, a guide rail extending along said feeding path is provided, and said apparatus frame is provided with a guide wheel which engages with said guide rail to guide a traveling route of the apparatus frame.

11. The feed pushing apparatus for a livestock barn according to claim 5, **characterized in that**
on said stall side, a guide rail extending along said feeding path is provided, and said apparatus frame is provided with a guide wheel which engages with said guide rail to guide a traveling route of the apparatus frame.

12. The feed pushing apparatus for a livestock barn according to claim 6, **characterized in that**
on said stall side, a guide rail extending along said feeding path is provided, and said apparatus frame is provided with a guide wheel which engages with said guide rail to guide a traveling route of the apparatus frame.

13. The feed pushing apparatus for a livestock barn according to any one of claims 1 to 12, **characterized in that**
at a side portion of said apparatus frame at said stall side, an auxiliary blade is provided to be turnable between a retreat position along said apparatus frame and an advance position where its tip end substantially contacts said stall side around a vertical shaft perpendicular to said feeding path, and said apparatus frame is provided with an auxiliary cylinder mechanism which drives the auxiliary blade to said advance position.

14. An operation method for pushing and gathering up feed, which is left on a feeding path to one end portion of the path by using the feed pushing apparatus according to claim 13, **characterized by** comprising the steps of:
sequentially performing:
an initial action (a) of causing said feed pushing apparatus to travel from said one end portion up to a position where it returns by a predetermined distance to the other end portion side with said auxiliary blade kept in said retreat position;
a pushing and gathering-up action (b) of thereafter, advancing said auxiliary blade to said advance position and causing the pushing apparatus to travel to said one end portion side, and thereby, pushing feed corresponding to a distance of a predetermined distance Lₘₐₓ or less to said one end portion side to gather it up; and
a return action (c) of retreating said auxiliary blade to said retreat position and causing said feed pushing apparatus to travel to said other end portion side up to a position where it returns by a distance of a predetermined distance Lₘₐₓ or less from an end portion of the left feed; and
repeating thereafter the above described pushing and gathering-up action (b) and return action (c), and
**characterized in that**
said predetermined distance Lₘₐₓ is a maximum distance which allows said traveling body to advance the auxiliary blade of said feed pushing apparatus to the advance position and push the feed to gather it up.
